# EUROPÄISCHE PATENTSCHRIFT

(11) **EP 1 095 803 B1**
(45) Veröffentlichungstag und Bekanntmachung des Hinweises auf die Patenterteilung: **01.03.2006**
(21) Anmeldenummer: 00122293.4
(22) Anmeldetag: 20.10.2000
(51) Int. Cl.: B60H 1/10, B60S 1/54, B62D 25/08

(54) **Kraftfahrzeug mit einer Belüftungsanordnung**
Motor vehicle with ventilating assembly
Véhicule à moteur avec dispositif de ventilation

(30) Priorität: 29.10.1999 DE 19952158
(43) Veröffentlichungstag der Anmeldung: 02.05.2001
(73) Patentinhaber: Volkswagen Aktiengesellschaft, 38436 Wolfsburg (DE)
(72) Erfinder: Ostrowski, Wolfgang, 38446 Wolfsburg (DE)

(56) Entgegenhaltungen:
- EP-A- 0 073 317
- DE-C- 19 648 740
- US-A- 4 549 471
- US-A- 4 604 946
- US-A- 4 766 805
- US-A- 4 805 522

## Beschreibung

Die vorliegende Erfindung betrifft ein Kraftfahrzeug mit einer Belüftungsanordnung, die einen Luftkanal mit mindestens einer Luftaustrittsöffnung zum Anströmen der Kraftfahrzeug-Windschutzscheibe und Luftversorgungsmittel aufweist.

Eine herkömmliche Belüftungsanordnung weist einen Luftkanal mit mindestens einer Luftaustrittsöffnung oder Luftdüse zum Anströmen des unteren Teils der Kraftfahrzeug-Windschutzscheibe mit Luft und Luftversorgungsmittel auf, durch die Luft dem Luftkanal zumindest während des Fahrbetriebs des Kraftfahrzeugs zuführbar ist. Herkömmlicherweise ist der Luftkanal innerhalb der Schalttafel angeordnet.

Eine derartige Belüftungsanordnung ist in der US-A-4 805 522 beschrieben. Diese weist einen Luftkanal mit mindestens einer Luftaustrittsöffnung zum Anströmen des unteren Teils der Windschutzscheibe mit Luft und Luftversorgungsmittel auf. Der Luftkanal ist von einem als Hohlkörper ausgebildeten Karosserieteil gebildet, dessen fahrgastzellenseitige Wandung der Schalttafel-Querträger ist. Die wenigstens eine Luftaustrittsöffnung ist in einer im Wesentlichen in horizontaler Ebene angeordneten Platte ausgebildet, und der Belüftungsstrom strömt aus dieser vertikal nach oben und ist im unteren Scheibenbereich wenig wirksam für die Scheibenbelüftung.

Nachteilhaft an einer solchen Anordnung ist, daß es sehr aufwendig ist, den Luftkanal in der Schalttafel unterzubringen und dieser zusätzlich relativ viel Raum innerhalb der Schalttafel einnimmt. Des weiteren sind herkömmlicherweise Luftdüsen in der der Windschutzscheibe zugewandten Seite der Schalttafel so angeordnet, daß die Belüftungsluft den unteren Teil der Windschutzscheibe anströmt. Die Anordnung der Luftdüsen innerhalb der Schalttafel ist jedoch nachteilhaft, wenn die Scheibenwischerblätter aus aerodynamischen und optischen Gründen möglichst tief auf der Windschutzscheibe aufliegen sollen, da in diesem Fall die in der Schalttafel angeordneten Luftdüsen nicht den Bereich der Windschutzscheibe anströmen, auf dem die Ruheposition der Scheibenwischblätter ist. Bei dieser Anordnung wird somit die Zeit verlängert, die erforderlich ist, um die Scheibenwischblätter, wenn sie im Winter an der Scheibe festgefroren sind, mittels durch die Luftdüsen zugeführte Warmluft zu enteisen.

Um dieses Problem zu lösen ist in der DE 196 48 740 C1 eine Defrostereinrichtung angegeben, bei der die Wischblätter der Scheibenwischer, deren Ruheposition unterhalb der unteren horizontalen Befestigungs-Klebelinie der Windschutzscheibe liegt, durch einen gesonderten Luftkanal mit Warmluft versorgt werden. Hierfür wird ein Luftkanal angeformt, der von einer Warmluftquelle kommende Luft abzweigt und der Ruheposition der Scheibenwischblätter zuführt. Da die Wischblattruheposition unterhalb der Klebelinie der Windschutzscheibe angeordnet ist, gelangt die Abluft der für die Wischblätter vorgesehene Luft nicht direkt ins Innere des Fahrzeugs.

Nachteilhaft an der in der DE 196 48 740 C1 vorgeschlagenen Defrostereinrichtung ist, daß es aufwendig ist, für die Ruheposition der Wischblätter einen gesonderten Luftkanal vorzusehen. Ferner ist es aus energetischer Sicht nachteilhaft, die den Wischblättem zugeführte Warmluft nicht direkt ins Innere des Fahrzeugs zu leiten.

Es ist die Aufgabe der vorliegenden Erfindung, ein Kraftfahrzeug mit einer Belüftungsanordnung nach dem Oberbegriff des Anspruchs 1 so zu gestalten, dass mit dieser Luft, insbesondere Warmluft, der Ruheposition der Wischblätter zugeführt werden kann und dass diese möglichst wenig zusätzlichen Platz im Inneren des Fahrzeugs einnimmt.

Diese Aufgabe wird erfindungsgemäß durch die Merkmale des Anspruchs 1 gelöst, wobei sich vorteilhafte Ausbildungen aus den Unteransprüchen ergeben.

Das erfindungsgemäße Kraftfahrzeug mit einer Belüftungsanordnung für die Windschutz-Scheibe desselben weist einen Luftkanal mit mindestens einer Luftaustrittsöffnung zum Anströmen des unteren Teils der Windschutz-Scheibe mit Luft und Luftversorgungsmittel auf, durch die Luft dem Luftkanal zumindest während des Fahrbetriebs des Kraftfahrzeugs zuführbar ist. Dabei ist der Luftkanal von einem als Hohlkörper ausgebildeten Querträger des Kraftfahrzeugs gebildet, an dem der untere Rand der Windschutz-Scheibe befestigt ist. Zwischen dem Querträger und derselben ist oberhalb der gebildeten Befestigungslinie zwischen diesen ein Spalt gebildet, in den mindestens eine am Querträger ausgebildete Luftaustrittsöffnung zum Anströmen des unteren, oberhalb der Befestigungslinie befindlichen Teils der Windschutz-Scheibe mündet.

Vorteilhaft an der erfindungsgemäßen Belüftungsanordnung ist, daß der herkömmlicherweise aufwendig gebildete Luftkanal platzsparend von einem in jedem Fall vorgesehenen Karosserieteil, nämlich dem zwischen den A-Säulen verlaufenden Querträger, an dem der untere Rand der Windschutz-Scheibe befestigt ist, gebildet wird. Ein gesonderter Luftkanal für die Belüftungsanordnung für die Scheibe muß demnach nicht in der Schalttafel oder anderswo gebildet werden. Diese Ausgestaltung ist besonders vorteilhaft, da der Querträger im unterstem Bereich der Windschutzscheibe zur Befestigung dieser angeordnet ist und somit der Luftkanal in unmittelbarer Umgebung der Ruheposition der Wischblätter vorgesehen ist.

Wenn die Windschutzscheibe an einem unteren Teil einer der Scheibe zugewandten Seite des Querträgers entlang einer Befestigungslinie befestigt ist, weist vorteilhafterweise die oberhalb der Befestigungslinie liegende der Scheibe zugewandte Seite des Querträgers mindestens eine Luftaustrittsöffnung zum Anströmen des unteren, oberhalb der Befestigungslinie der Scheibe liegenden Teils der Scheibe und zum Belüften des Innenraums des Kraftfahrzeugs auf. Die Luftaustrittsöffnungen sind vorteilhafterweise als Luftdüsen ausgebildet oder es sind Luftdüsen in die Öffnungen eingesetzt. Ferner kann die Luftaustrittsöffnung in dem Querträger als Schlitz ausgebildet sein.

Diese Ausbildungen sind besonders geeignet für eine Ruheposition der Wischblätter oberhalb der unteren Befestigungslinie der Windschutzscheibe. In diesem Fall kann vorteühafterweise Warmluft durch die Luftaustrittsöffnungen in dem Querträger zu der Ruheposition der Wischblätter gelangen, die Wischblätter enteisen und danach den Innenraum des Kraftfahrzeugs erwärmen.

Falls die Ruheposition der Wischblätter unterhalb der unteren Befestigungslinie der Windschutzscheibe liegt, weist gemäß einer weiteren Ausbildung der Erfindung die unterhalb der Befestigungslinie liegende, der Scheibe zugewandte Seite des Querträgers mindestens eine Luftaustrittsöffnung zum Anströmen des unterhalb der Befestigungslinie der Scheibe liegenden Teils der Scheibe auf. Vorteilhafterweise kann gemäß dieser Ausbildung den Wischblättem auch dann Luft zugeführt werden, wenn deren Ruheposition im untersten Teil der Windschutzscheibe unterhalb der Befestigungslinie der Scheibe liegt, wobei es nicht erforderlich ist, einen gesonderten Luftkanal hierfür vorzusehen. Auch in diesem Fall können die Luftaustrittsöffnungen als Luftdüsen ausgebildet sein oder es können in die Öffnungen Luftdüsen eingesetzt sein. Ferner kann die Öffnung auch als Schlitz ausgebildet sein.

Des weiteren weist das Karosserieteil eine Einströmöffnung auf, durch die von den Luftversorgungsmitteln zugeführte Luft in das Karosserieteil einströmen kann. Wenn als Karosserieteil der zwischen den A-Säulen des Kraftfahrzeugs verlaufende Querträger verwendet wird, kann die Einströmöffnung in dem Querträger besonders einfach dort angeordnet werden, wo auf einfache Weise ein Anschluß an die Luftversorgungsmittel erzielbar ist. Dies macht den Aufbau der erfindungsgemäßen Belüftungsanordnung sehr einfach und somit kostengünstig.

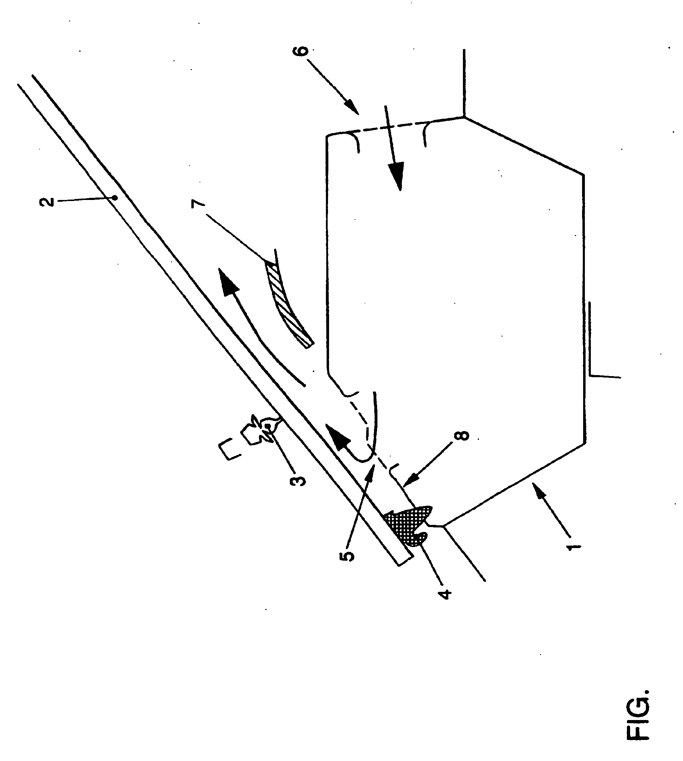

Die vorliegende Erfindung wird nun anhand von Ausführungsbeispielen unter Bezugnahme auf die beigefügte Zeichnung im Detail erläutert.

Die Figur zeigt einen Teil der erfindungsgemäßen Belüftungsvorrichtung in einem schematisch dargestellten Ausschnitt eines Längsschnittes durch das Kraftfahrzeug.

Die erfindungsgemäße Belüftungsanordnung wird im wesentlichen von einem als Hohlkörper ausgebildeten Karosserieteil 1 des Kraftfahrzeugs gebildet. In dem hier gezeigten Ausführungsbeispiel ist das Karosserieteil der zwischen den A-Säulen des Kraftfahrzeugs verlaufende Querträger 1. Der untere Teil der Windschutzscheibe 2 ist an diesem Querträger 1 mittels einer Verklebung 4 befestigt. In dem in der Figur gezeigten Ausführungsbeispiel ist die Ruheposition der Wischblätter 3 der Scheibenwischer für die Windschutzscheibe 2 oberhalb der Befestigungslinie 4 der Windschutzscheibe 2.

Von (nicht gezeigten) Luftversorgungsmitteln strömt Luft durch eine in dem Querträger 1 gebildeten Einströmöffnung 6 in den Querträger 1. Über den Innenraum des über die gesamte Breite des Kraftfahrzeugs verlaufenden Querträgers 1 kann die von den Luftversorgungsmitteln zugeführte Luft jeder Position entlang der Breite des Kraftfahrzeugs am unteren Ende der Windschutzscheibe 2 zugeführt werden.

Zum Austritt der Belüftungsluft sind in dem Querträger 1 Luftaustrittsöffnungen 5 gebildet. Diese Öffnungen können als Luftdüsen ausgebildet sein oder es können Luftdüsen in die Öffnungen 5 eingesetzt sein. Ferner kann die Luftaustrittsöffnung als ein Schlitz oder mehrere Schlitze ausgebildet sein. Die Luftaustrittsöffnungen 5 sind in der der Windschutzscheibe 2 zugewandten Seite 8 des Querträgers 1 gebildet, so daß die Belüftungsluft den unteren Teil der Windschutzscheibe 2 direkt anströmt und danach in den Innenraum des Kraftfahrzeugs gelangen kann. Hierfür schließt der der Scheibe 2 zugewandte Teil der Schalttafel 7 nicht an die Scheibe 2 angrenzend ab, sondern läßt einen Spalt zum Durchstrom der Belüftungsluft frei.

Bei einem weiteren, hier nicht gezeigten Ausführungsbeispiel der Erfindung ist die Befestigung 4 bei dem oberen Ende der der Windschutzscheibe 2 zugewandten Seite 8 des Querträgers 1 vorgesehen und die Ruheposition der Wischblätter 3 liegt unterhalb dieser Befestigungslinie 4. Auch in diesem Fall kann die durch die Luftaustrittsöffnungen 5 ausströmende Luft direkt zu der Ruheposition der Wischblätter 3 gelangen und auch an der Windschutzscheibe 2 festgefrorenen Wischblättem 3 sehr wirkungsvoll enteist werden.

## Patentansprüche

1. Kraftfahrzeug mit einer Belüftungsanordnung, die einen Luftkanal mit mindestens einer Luftaustrittsöffnung (5) zum Anströmen des unteren Teils der Kraftfahrzeug-Windschutzscheibe (2) mit Luft aufweist sowie Luftversorgungsmitteln, durch die Luft dem Luftkanal zumindest während des Fahrbetriebs des Kraftfahrzeugs zuführbar ist, wobei der Luftkanal von einem als Hohlkörper ausgebildeten Querträger (1) des Kraftfahrzeugs gebildet ist, an dem der untere Rand der Windschutzscheibe (2) befestigt ist, **dadurch gekennzeichnet, dass** zwischen dem Querträger (1) und der Windschutzscheibe (2) oberhalb der gebildeten Befestigungslinie (4) ein Spalt gebildet ist, in den mindestens eine am Querträger (1) ausgebildete Luftaustrittsöffnung (5) zum Anströmen des unteren, oberhalb der Befestigungslinie (4) befindlichen Teils der Windschutzscheibe (2) mündet.

2. Kraftfahrzeug nach Anspruch 1, **dadurch gekennzeichnet, dass** eine oberhalb des Querträgers (1) angeordnete Schalttafel (7) mit der Windschutzscheibe (2) einen Spalt zum Durchströmen der Belüftungsluft ausbildet.

3. Kraftfahrzeug nach Anspruch 1, **dadurch gekennzeichnet, dass** der Querträger (1) unterhalb der Befestigungslinie (4) mindestens eine weitere Luftaustrittsöffnung (5) zum Anströmen des unterhalb der Befestigungslinie (4) der Scheibe (2) liegenden Teils der Scheibe (2) aufweist.

4. Kraftfahrzeug nach Anspruch 1 oder 3, **dadurch gekennzeichnet, dass** der Querträger (1) mehrere Luftaustrittsöffnungen (5) aufweist, die als Luftdüsen ausgebildet sind oder in die Luftdüsen eingesetzt sind.

5. Kraftfahrzeug nach Anspruch 1 oder 3, **dadurch gekennzeichnet, dass** die Luftaustrittsöffnung (5) als Schlitz ausgebildet ist.

6. Kraftfahrzeug nach einem oder mehreren der vorstehenden Ansprüche,
**dadurch gekennzeichnet, dass** auf der Außenseite der Windschutzscheibe (2) Wischblätter (3) aufliegen, deren Ruheposition in dem Bereich der Scheibe (2) gegeben ist, der von der mindestens einen Luftaustrittsöffnung (5) des Karosserieteils (1) mit Luft anströmbar ist.

7. Kraftfahrzeug nach einem oder mehreren der vorstehenden Ansprüche, **dadurch gekennzeichnet, dass** der Querträger (1) eine Einströmöffnung (6) aufweist, durch die von den Luftversorgungsmitteln zugeführte Luft in diesen (1) einströmen kann.

## Claims

1. Motor vehicle with a ventilation arrangement which comprises an air duct with at least one air outlet opening (5) for blowing air against the lower part of the motor vehicle windscreen (2) and also air supply means by which air can be supplied to the air duct at least during driving operation of the motor vehicle, the air duct being formed by a crossbeam (1) of the motor vehicle which is designed as a hollow body and to which the lower edge of the windscreen (2) is fastened, **characterized in that** a gap, into which at least one air outlet opening (5) designed on the crossbeam (1) for blowing against the lower part of the windscreen (2) located above the fastening line (4) formed opens, is formed between the crossbeam (1) and the windscreen (2) above the fastening line (4).

2. Motor vehicle according to Claim 1, **characterized in that** a control panel (7) arranged above the crossbeam (1) forms a gap with the windscreen (2) for the ventilation air to flow through.

3. Motor vehicle according to Claim 1, **characterized in that** the crossbeam (1) comprises below the fastening line (4) at least one further air outlet opening (5) for blowing against that part of the screen (2) located below the fastening line (4) of the screen (2).

4. Motor vehicle according to Claim 1 or 3, **characterized in that** the crossbeam (1) comprises a number of air outlet openings (5) which are designed as air nozzles or into which air nozzles are inserted.

5. Motor vehicle according to Claim 1 or 3, **characterized in that** the air outlet opening (5) is designed as a slot.

6. Motor vehicle according to one or more of the preceding claims, **characterized in that** wiper blades (3), the rest position of which is provided **in that** region of the screen (2) which can have air blown against it by the at least one air outlet opening (5) of the body part (1), lie on the outer side of the windscreen (2).

7. Motor vehicle according to one or more of the preceding claims, **characterized in that** the crossbeam (1) comprises an inflow opening (6) through which the air supplied by the air supply means can flow into it (1) .

## Revendications

1. Véhicule automobile comprenant un dispositif de ventilation qui présente un conduit d'air avec au moins une ouverture de sortie d'air (5) pour l'afflux d'air à la partie inférieure du pare-brise (2) du véhicule automobile, ainsi que des moyens d'alimentation en air qui permettent d'alimenter le conduit d'air en air au moins pendant la conduite du véhicule automobile, le conduit d'air étant formé par une traverse (1) du véhicule automobile réalisée sous forme de corps creux, à laquelle est fixé le bord inférieur du pare-brise (2), **caractérisé en ce qu'**entre la traverse (1) et le pare-brise (2) au-dessus de la ligne de fixation formée (4), se trouve une fente dans laquelle débouche au moins une ouverture de sortie d'air (5) réalisée sur la traverse (1) pour l'afflux d'air à la partie inférieure du pare-brise (2) se trouvant au-dessus de la ligne de fixation (4).

2. Véhicule automobile selon la revendication 1, **caractérisé en ce qu'**un tableau de commande (7) disposé au-dessus de la traverse (1) forme avec le pare-brise (2) une fente pour le passage de l'air de ventilation.

3. Véhicule automobile selon la revendication 1, **caractérisé en ce que** la traverse. (1) présente en dessous de la ligne de fixation (4) au moins une autre ouverture de sortie d'air (5) pour l'afflux d'air à la partie du pare-brise (2) se trouvant en dessous de la ligne de fixation (4) du pare-brise (2) .

4. Véhicule automobile selon la revendication 1 ou 3, **caractérisé en ce que** la traverse (1) présente plusieurs ouvertures de sortie d'air (5) qui sont réalisées sous forme de buses d'air ou dans lesquelles sont insérées des buses d'air.

5. Véhicule automobile selon la revendication 1 ou 3, **caractérisé en ce que** l'ouverture de sortie d'air (5) est réalisée sous forme de fente.

6. véhicule automobile selon l'une quelconque ou plusieurs des revendications précédentes, **caractérisé en ce que** du côté extérieur du pare-brise (2) sont posés des essuie-glace (3) dont la position de repos est indiquée dans la région du pare-brise (2) qui peut être soumise à l'afflux d'air depuis l'au moins une ouverture de sortie d'air (5) de la pièce de la carrosserie (1).

7. Véhicule automobile selon l'une quelconque ou plusieurs des revendications précédentes, **caractérisé en ce que** la traverse (1) présente une ouverture d'entrée (6) à travers laquelle l'air acheminé par les moyens d'alimentation en air peut entrer dans celle-ci (1).
